# EUROPÄISCHE PATENTSCHRIFT

(11) **EP 1 030 075 B1**
(45) Veröffentlichungstag und Bekanntmachung des Hinweises auf die Patenterteilung: **14.07.2004**
(21) Anmeldenummer: 00890006.0
(22) Anmeldetag: 10.01.2000
(51) Int. Cl.: F16D 69/04

(54) **Verfahren und Vorrichtung zum Aufkleben von Reibbelagssegmenten auf einen Tragring**
Method and device for bonding of friction lining segments on a support ring
Méthode et appareil pour l'application de segments de garniture de friction par collage à une bague de support

(30) Priorität: 16.02.1999 AT 23799
(43) Veröffentlichungstag der Anmeldung: 23.08.2000
(73) Patentinhaber: Miba Frictec GmbH, 4663 Laakirchen (AT)
(72) Erfinder: Strohmann, Franz, 4664 Oberweis (AT)
(74) Vertreter: Hübscher, Helmut, Dipl.-Ing.

(56) Entgegenhaltungen:
- EP-A- 0 583 516
- EP-A- 0 806 586

## Beschreibung

Die Erfindung bezieht sich auf ein Verfahren zum Aufkleben von Reibbelagsegmenten auf einen Tragring, wobei die Reibbelagsegmente aus einem bandförmigen, dem Tragring auf der zu beklebenden Ringseite zugeführten Reibbelag mit Hilfe von Stempeln eines Stanzpreßwerkzeuges ausgestanzt und an den Tragring angedrückt werden, und wobei dem Tragring über den Umfang verteilt mehrere Reibbelagbänder radial zugeführt werden, aus denen Reibbelagsegmente mit Hilfe der Stempel ausgestanzt und an den Tragring angedrückt werden.

Um zur Herstellung beispielsweise einer Kupplungsscheibe Reibbelagsegmente auf einen Tragring aufzukleben, ist es bekannt (EP 0 583 516 A1), die einzelnen Reibbelagsegmente aus einem bandförmigen Reibbelag auszustanzen und an den mit einem Klebemittel beschichteten Tragring anzupressen, und zwar mit Hilfe eines Stanzpreßwerkzeuges, das oberhalb einer zentrierenden Aufnahme für den Tragring angeordnet ist und eine Matrize mit einer durchgehenden Durchtrittsöffnung für einen Stempel aufweist, so daß die Reibbelagsegmente aus dem bandförmigen Reibbelag, der auf der der Aufnahme für den Tragring abgekehrten Seite der Matrize dem Stanzpreßwerkzeug über einen Schrittförderer zugeführt wird, nacheinander ausgestanzt und mit Hilfe des Stempels durch die Durchtrittsöffnung in der Matrize an den Tragring angepreßt werden, der nach jedem Aufbringen eines Reibbelagsegmentes um einen entsprechenden Winkelschritt gedreht werden muß. Nachteilig bei einer solchen Aufbringung der einzelnen Reibbelagsegmente auf den Tragring ist vor allem, daß die Reibbelagsegmente nur nacheinander auf den Tragring aufgebracht werden können und daß der Tragring nach jedem Aufbringen eines Reibbelagsegmentes um einen an die Umfangslänge der Reibbelagsegmente angepaßten Winkelschritt zu drehen ist. Wird der bandförmige Reibbelag dem Tragring nicht tangential, sondern radial in einer sich über mehrere Reibbelagsegmente erstreckenden Breite zugeführt, so können aus dem bandförmigen Reibbelag gleichzeitig mehrere Reibbelagsegmente ausgestanzt und mit Hilfe der dafür vorgesehenen Stempel an den Tragring angedrückt werden. Damit kann die für die Belegung des Tragringes mit Reibbelagsegmenten erforderliche Anzahl von Drehschritten des Tragringes verringert und die für die Belegung des Tragringes mit den Reibbelagsegmenten erforderliche Zeitspanne verkürzt werden. Trotzdem bleiben die grundsätzlichen Nachteile solcher Vorrichtungen hinsichtlich der Notwendigkeit erhalten, die Reibbelagsegmente zumindest gruppenweise nacheinander aus dem zugeführten bandförmigen Reibbelag ausstanzen und auf den zwischen den einzelnen Stanzvorgängen gedrehten Tragring andrücken zu müssen. In diesem Zusammenhang ist außerdem zu bedenken, daß mit zunehmender Breite des bandförmigen Reibbelages der Schnittabfall größer wird. Außerdem ist ein Nachkalibrieren des Reibringes erforderlich, um eine einheitliche Belagdicke nach dem gruppenweisen Aufbringen der Reibbelagsegmente sicherzustellen.

Schließlich ist es bekannt (EP 0806 586 A2), dem Tragring über den Umfang verteilt mehrere Reibbelagbänder radial zuzuführen und aus jedem der Reibbelagbänder mit Hilfe von Stempeln eines Stanzpreßwerkzeuges je ein Reibbelagsegment auszustanzen und an den Tragring anzudrücken. Da die Reibbelagbänder im Bereich des Tragringes einen der Umfangserstreckung eines Reibbelagsegmentes entsprechenden Seitenabstand voneinander aufweisen, braucht der Tragring lediglich um einen der Umfangserstreckung eines Reibbelagsegmentes entsprechenden Winkelschritt gedreht zu werden, um nach einem Vorschub der Reibbelagbänder neue Reibbelagsegmente auszustanzen und zur Vervollständigung der ringförmigen Anordnung der Reibbelagsegmente in den Zwischenräumen zwischen den bereits auf den Tragring aufgebrachten Reibbelagsegmenten an den Tragring anzudrücken. Damit kann zwar die Belegung einer Tragringseite mit einem Ring von Reibbelagsegmenten auf zwei aufeinanderfolgende Stanzvorgänge beschränkt werden, zwischen denen der Tragring allerdings gedreht werden muß, wenn er nicht zusätzlich einem Förderschritt zwischen zwei räumlich voneinander getrennten, gegeneinander entsprechend winkelversetzten Stanzpreßwerkzeugen unterworfen werden soll, doch bleibt der grundsätzliche Nachteil einer gruppenweisen Aufbringung der Reibbelagsegmente auf den Tragring erhalten.

Der Erfindung liegt somit die Aufgabe zugrunde, ein Verfahren der eingangs geschilderten Art zum Aufkleben von Reibbelagsegmenten auf einen Tragring so auszugestalten, daß in einem Arbeitsgang alle Reibbelagsegmente zumindest auf einer Seite des Tragrings ausgestanzt und auf den Tragring aufgeklebt werden können, ohne einen großen Schnittabfall in Kauf nehmen zu müssen.

Die Erfindung löst die gestellte Aufgabe dadurch, daß aus den im Bereich des äußeren Umfanges des Tragringes aneinanderstoßenden Reibbelagbändern ein Ring von Reibbelagsegmenten mit Hilfe der Stempel eines allen Reibbelagbändem gemeinsamen Stanzpreßwerkzeuges zugleich ausgestanzt und an den Tragring angedrückt werden.

Da die über den Umfang verteilten Reibbelagbänder jeweils einen Umfangsabschnitt des Tragringes abdecken und sich diese Umfangsabschnitte lückenlos aneinanderreihen, ergibt sich ein dem Stand der Technik vergleichbarer Verschnitt, obwohl ein vollständiger Ring von Reibbelagsegmenten gleichzeitig ausgestanzt wird. Das allen Reibbelagbändern gemeinsame Stanzpreßwerkzeug erlaubt nicht nur das gleichzeitige Ausstanzen, sondern auch das gleichzeitige Anpressen der aus den einzelnen Reibbelagbändern ausgestanzten Reibbelagsegmente an den Tragring unter einheitlichen Verhältnissen, so daß ein Nachkalibrieren des auf den Tragring aufgebrachten Reibbelages entfallen kann. Die für das Aufkleben der Reibbelagsegmente erforderliche Klebeschicht kann dabei den Reibbelagbändern und/oder dem Tragring zugeordnet werden. Werden dem Tragring auf beiden Ringseiten über den Umfang verteilt mehrere Reibbelagbänder zum Ausstanzen und Andrücken je eines Ringes von Reibbelagsegmenten zugeführt, so können Reibringe aus einem Tragring, der auf beiden Ringseiten aufgeklebte Reibbelagsegmente aufweist, in einem Arbeitsgang hergestellt werden.

Zur Durchführung des Verfahrens kann von einer Vorrichtung ausgegangen werden, die mit einer zentrierenden Aufnahme für den Tragring und mit einem der Aufnahme zugeordneten Stanzpreßwerkzeug versehen ist, das einerseits eine Matrize mit mehreren entsprechend der vorgegebenen Verteilung der Reibbelagsegmente auf dem Tragring angeordnete Durchtrittsöffnungen und anderseits durch diese Durchtrittsöffnungen an einen in der Aufnahme gehaltenen Tragring anpreßbare Stempel zum Ausstanzen von Reibbelagsegmenten aus einem bandförmigen Reibbelag aufweist, der auf der der Aufnahme abgekehrten Seite der Matrize dem Stanzpreßwerkzeug über einen radial zur Zentrierungsachse ausgerichteten Schrittförderer zuführbar und mittels eines Niederhalters an die Matrize andrückbar ist. Diese Vorrichtung ist so auszugestalten, daß mehrere über den Umfang der Aufnahme verteilte Schrittförderer für je ein Reibbelagband vorgesehen sind, daß den Reibbelagbändern ein gemeinsames Stanzpreßwerkzeug zum gleichzeitigen Ausstanzen und Andrücken der Reibbelagsegmente aus den einzelnen Reibbelagbändern zugeordnet ist, daß sich die Langsrandverläufe benachbarter Reibbelagbänder außerhalb des Ringes der Durchtrittsöffnungen bzw. der Stempel des Stanzpreßwerkzeuges schneiden und daß der Niederhalter oder die Matrize im Bereich jedes Reibbelagbandes außerhalb des Ringes der Durchtrittsöffnungen bzw. der Stempel eine in ihrem Verlauf an die innere Umrißlinie dieses Ringes angepaßte Schneide bildet, die mit Abstand vor dem jeweiligen Längsrand der Reibbelagbänder in einen radialen, die Stoßkante zum benachbarten Reibbelagband ausschneidenden Endabschnitt ausläuft

Die Voraussetzung dafür, daß ein geschlossener Ring aus Reibbelagsegmenten aus den radial zugeführten Reibbelagbändern ausgestanzt werden kann, wird durch die Forderung nach einem Schnitt der Längsrandverläufe benachbarter Reibbelagbänder außerhalb des durch die Durchtrittsöffnungen der Matrize gebildeten Ringes erfüllt. Dies bedeutet, daß die einzelnen Reibbelagbander so beschnitten werden mussen, daß sie beim schrittweisen Vorschieben gegen die Matrize einander nicht überlappen, sondern vielmehr vom Schnittpunkt der Längsrandverläufe ausgehende, radiale Stoßkanten bilden. Da außerdem der beim Ausstanzen der Reibbelagsegmente anfallende Schnittabfall zwischen der Matrize und dem Niederhalter abzuführen ist, bevor die Reibbelagbänder ungestört um einen weiteren Förderschritt gegen die Matrize vorgeschoben werden können, ist dieser Schnittabfall vom jeweiligen Reibbelagband abzutrennen. Zu diesem Zweck bildet der Niederhalter oder die Matrize im Bereich jedes Reibbelagbandes außerhalb des Ringes der Durchtrittsöffnungen bzw. der Stempel eine entsprechende Schneide, deren Verlauf an die innere Umrißlinie des Ringes der Durchtrittsöffnungen bzw. der Stempel angepaßt sein muß, damit beim folgenden Förderschritt der vordere Rand der Reibbelagbänder über den Ring der Durchtrittsöffnungen bzw. Stempel nach innen vorsteht. Die erforderlichen, radial zu diesem Ring verlaufenden Stoßkanten benachbarter Reibbelagbänder werden zugleich mit Hilfe von Endabschnitten der Schneide ausgeschnitten, so daß beim schnittgerechten Spannen der Reibbelagbänder zwischen der Matrize und dem Niederhalter die Reibbelagbänder so beschnitten werden, daß ein weiterer Förderschritt zum Belegen eines weiteren Tragringes mit Reibbelagsegmenten sichergestellt wird

Um nicht nur eine Tragringseite, sondern den Tragring auf beiden Seiten mit Reibbelagsegmenten gleichzeitig bekleben zu können, kann dem Stanzpreßwerkzeug auf der einen Seite des Tragringes ein gleichartiges Stanzpreßwerkzeug zum jeweils gemeinsamen Ausstanzen von Reibbelagsegmenten aus mehreren radial zugeführten Reibbelagbändern auf der anderen Tragringseite gegenüberliegen, wobei die Aufnahme für den Tragring die Matrize für eines dieser Stanzpreßwerkzeuge bildet. Die Reibbelagsegmente auf der der Auflage zugekehrten Tragringseite können somit durch die eine entsprechende Matrize für die Stempel bildende Aufnahme an die zugekehrte Tragringseite angedrückt werden, wobei sich der Tragring an den Stempeln des Stanzpreßwerkzeuges auf der der Aufnahme gegenüberliegenden Tragringseite abstützt

Besonders einfache Konstruktionsverhältnisse ergeben sich, wenn die beiden Stanzpreßwerkzeuge den Ober- und Unterteil eines Presseneinsatzes bilden, wobei jeweils die Matrize im zugehörigen Niederhalter axial verstellbar gelagert ist, während sich der im stempeltragenden Ober- bzw. Unterteil axial verschiebbare Niederhalter gegenüber dem Ober- bzw. Unterteil federnd abstützt Werden Ober- und Unterteil über die Presse gegeneinandergedrückt, so legt sich zunächst die Matrize des Oberteils an die durch die Aufnahme für den Tragring gebildeten Matrize des Unterteils mit der Wirkung an, daß zufolge des zunehmenden Pressenhubes die federbelasteten Niederhalter unter einem Festklemmen und Beschneiden der Reibbelagbänder an die Matrizen angedrückt werden, bevor die Stempel des Ober- und des Unterteils zum Einsatz kommen und die Reibbelagsegmente aus den von den Reibblagbändern abgeschnittenen, zwischen Matrize und Niederhalter gespannten Endstücken ausstanzen und durch die Durchtrittsoffnungen in den Matrizen an den Tragring andrücken und festkleben. Die Klebemittelschicht kann dabei dem Tragring und/oder den Reibbelagsegmenten zugeordnet werden. Beim Öffnen des Presseneinsatzes werden die Stempel aus den Matrizen herausgezogen, wobei die Belastungsfedern der Niederhalter diese im Sinne einer Anlage an den zugehörigen Matrizen beaufschlagen. Um trotz dieser Beaufschlagung die Niederhalter von den Matrizen abheben zu können, müssen die in den Niederhaltern verschiebbar gelagerten Matrizen entsprechend verstellt werden. Zu diesem Zweck kann das Eigengewicht der Matrize des Oberteils ausgenützt werden. Für die Matrize des Unterteils ist allerdings zwischen der Matrize und dem Niederhalter eine Öffnungsfeder vorzusehen. Beim Abheben der Matrize des Oberteils von der Aufnahme des Unterteils öffnen sich somit die Führungsspalte zwischen den Matrizen und den zugehörigen Niederhaltern, um einerseits den Schnittabfall aus den Stanzpreßwerkzeugen abführen und anderseits die beim vorausgehenden Pressenhub beschnittenen Enden der Reibbelagbänder in die Stanzpreßwerkzeuge vorschieben zu können.

Zum Abführen der Schnittabfälle, die sich beim Ausstanzen der Reibbelagsegmente aus den von den Reibbelagbändern abgeschnittenen Endstücken ergeben, können Abführeinrichtung im Zwickelbereich zwischen benachbarten Reibbelagbändern vorgesehen werden. Diese Abführeinrichtungen können Greif- oder Stichwerkzeuge zum Erfassen der abgeschnittenen Endstücke der Reibbelagbänder aufweisen, wobei sich zum Ausziehen der Schnittabfälle aus dem Führungsspalt zwischen Matrize und Niederhalter eine Bewegungsrichtung parallel zum Stoß zwischen den abgeschnittenen Endstücken empfiehlt, wenn die Schnittabfälle zweier benachbarter Bänder gemeinsam abgeführt werden sollen.

Um die Reibbelagsegmente nicht nur in einem Arbeitsgang aus mehreren Reibbelagbändern ausstanzen und an den Tragring ankleben zu können, sondern auch eine Aushärtung der Klebemittelschicht zu ermöglichen, können die Stempel des Stanzpreßwerkzeuges bzw. der Stanzpreßwerkzeuge elektrisch beheizbar sein, so daß eine Heißpressung zum Aushärten der Klebemittelschicht erreicht werden kann

Damit im Reibbelag nicht nur Ölnuten sichergestellt werden können, die sich zwischen den Reibbelagsegmenten aufgrund eines gegenseitigen Abstandes ergeben, können in die Reibbelagsegmente auch Ölnuten eingeprägt werden. Zu diesem Zweck können die Stempel des Stanzpreßwerkzeuges bzw. der Stanzpreßwerkzeuge Prageleisten zum Einprägen von Ölnuten in die Reibbelagsegmente aufweisen, mit deren Hilfe die Ölnuten beim Andrücken der Reibbelagsegmente an den Tragring in die Reibbelagsegmente eingepreßt werden.

In der Zeichnung ist der Erfindungsgegenstand beispielsweise dargestellt. Es zeigen
- Fig. 1: eine erfindungsgemäße Vorrichtung zum Aufbringen von Reibbelagsegmenten auf einen Tragring mit geöffneten Stanzwerkzeugen in einem schematischen Axialschnitt,
- Fig. 2: diese Vorrichtung mit geschlossenen Stanzpreßwerkzeugen und
- Fig. 3: einen Schnitt nach der Linie III-III der Fig. 1, allerdings nach einem Stanzvorgang.

Die dargestellte Vorrichtung bildet einen Presseneinsatz aus einem Unterteil 1 und einem Oberteil 2, welche Teile 1, 2 mit je einem Stanzpreßwerkzeug 3 versehen sind. Die Stanzpreßwerkzeuge 3 weisen jeweils eine Matrize 4 mit Durchtrittsöffnungen 5 für am Unterteil 1 bzw. am Oberteil 2 angeordnete Stempel 6 auf. Die Matrize 4 des Unterteils 1 bildet eine zentrierende Aufnahme 7 für einen Tragring 8, der sich über radial abstehende Mitnehmer 9 am Außenumfang der Aufnahme 7 zentriert. Es braucht wohl nicht besonders hervorgehoben zu werden, daß eine Zentrierung des Tragringes 8 auch über seinen Innendurchmesser erfolgen kann.

Die Matrizen 4 sind über einen zylindrischen Führungskörper 10 in einem Niederhalter 11 anschlagbegrenzt axial verschiebbar gelagert. Die Durchtritte 12 für die Stempel 6 aufweisenden Niederhalter 11 sind koaxial verschiebbar im zugehörigen Unter- bzw. Oberteil 1, 2 geführt und stützen sich über Druckfedern 13 und 14 am Unterteil 1 bzw. am Oberteil 2 ab. Während die Druckfeder 14 im Oberteil 2 unmittelbar auf den Niederhalter 11 einwirkt, wird der Niederhalter 11 des Unterteiles 1 über den zylindrischen Führungskörper 10 der Matrize 4 von der Druckfeder 13 beaufschlagt. Da zwischen der Matrize 4 und dem Niederhalter 11 des Unterteils 1 eine Öffnungsfeder 15 vorgesehen ist, muß zunächst die Öffnungsfeder 15 überwunden werden, bevor der Niederhalter 11 an die Matrize 4 des Unterteiles 1 angedrückt werden kann.

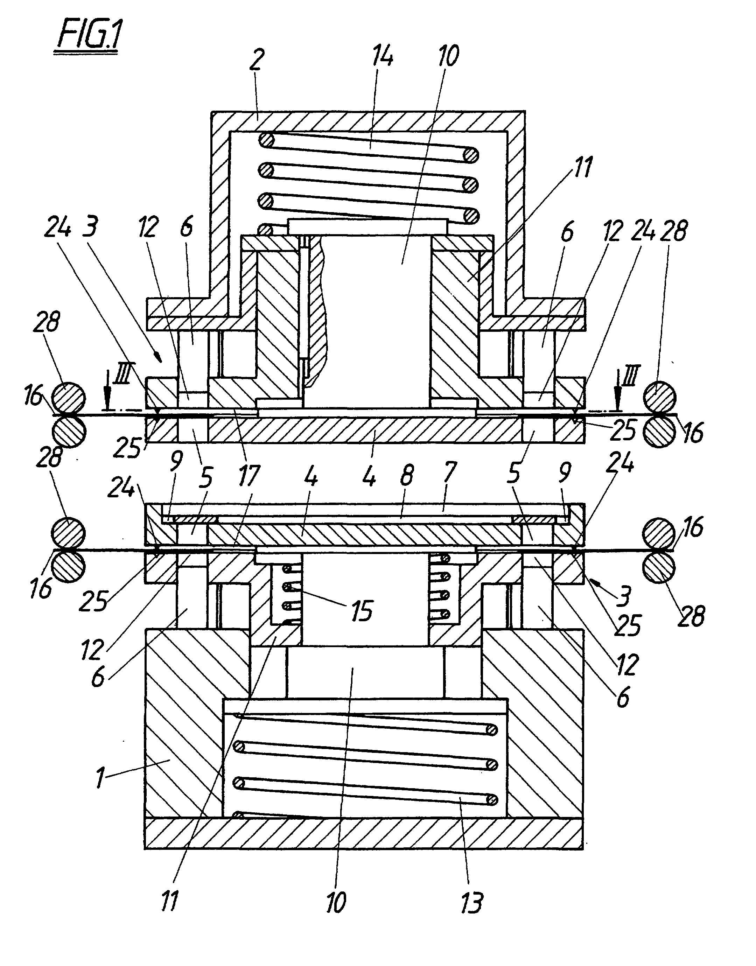

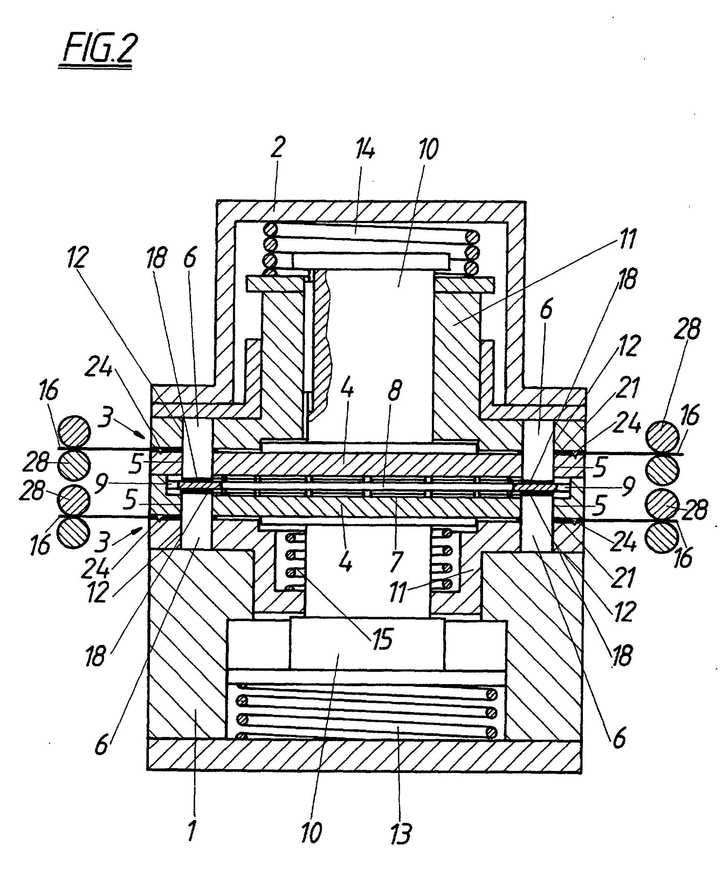

Werden die in eine Presse eingesetzten Ober- und Unterteile 2, 1 zufolge eines Arbeitshubes der Presse aus der in der Fig. 1 gezeichneten Offenstellung in die Preßstellung nach der Fig. 2 gegeneinander gedrückt, so setzen zunächst die beiden Matrizen 4 des Ober- und Unterteiles 2, 1 aufeinander auf, um dann beim weiteren Pressenhub gegen die Kraft der Federn 13 und 14 gegenüber dem Ober- bzw. Unterteil 2, 1 verschoben zu werden. Da die Matrize 4 des Oberteils 2 anschlagbegrenzt innerhalb des Niederhalters 11 verschiebbar gelagert ist, legt sich zuerst der Niederhalter 11 an die Matrize 4 an, bevor über die Feder 14 eine erhöhte Anpreßkraft des Niederhalters 11 auf die Matrize 4 ausgeübt werden kann.

Im Bereich des Unterteils 1 wird die über die Matrize 4 des Oberteiles 2 belastete Matrize 4 gegen die Kraft der Öffnungsfeder 15 an den unteren Niederhalter 11 angedrückt, um dann beim Verschieben der unteren Matrize 4 gegen die Kraft der Feder 13 einen entsprechenden Anpreßdruck zwischen der Matrize 4 und dem Niederhalter 11 aufbauen zu können. Mit der axialen Verschiebung der Matrizen 4 mit den angedrückten Niederhaltern 11 gegenüber dem zugehörigen Ober- bzw. Unterteil 2 bzw. 1 treten die Stempel 6 der Oberund Unterteile 2, 1 durch die Durchtritte 12 der Niederhalter 11 in die Durchtrittsöffnungen 5 der Matrizen 4 ein, um dann durch die Durchtrittsöffnungen 5 der Matrizen 4 hindurch gegen den Tragring 8 gedrückt zu werden, wie dies in der Fig. 2 dargestellt ist. Werden vor dem Arbeitshub der Presse den Stanzpreßwerkzeugen 3 radial Reibbelagbänder 16 zugeführt, so werden die in den Führungsspalt 17 zwischen den Niederhaltern 11 und den Matrizen 4 eingeführten Reibbelagbänder 16 beim Pressenhub zunächst geklemmt, bevor die Stempel 6 im Zusammenwirken mit den Durchtrittsöffnungen 5 der Matrizen 4 Reibbelagsegmente 18 ausstanzen und durch die Durchtrittsöffnungen 5 an den Tragring 8 andrücken. Weisen die Reibbelagbänder 16 und/oder die mit den Reibbelagsegmenten 18 zu belegenden Seiten des Tragringes 8 eine entsprechende Klebemittelschicht auf, so werden die ausgestanzten Reibbelagsegmente 18 unmittelbar auf den Tragring 8 aufgeklebt. Eine Aushärtung der Klebemittelschicht kann bei einer entsprechenden Erwärmung der Druckstempel 6 erreicht werden, die zu diesem Zweck elektrisch zu beheizen sind.

Beim Öffnen der Presse werden in umgekehrter Reihenfolge zunächst die Stempel 6 aus den Durchtrittsöffnungen 5 der Matrizen 4 gezogen, bis der Federweg der Federn 13 und 14 durch Anschlage begrenzt wird. Der weitere Öffnungshub bedingt dann im Bereich des Oberteils 2 ein gewichtsbedingtes Abheben der Matrize 4 vom Niederhalter 11 und im Bereich des Unterteils 1 ein Abheben der Matrize 4 vom Niederhalter 11 zufolge der Öffnungsfeder 15, so daß die Reibbelagbänder 16 im Bereich beider Stanzpreßwerkzeuge 3 freigegeben werden.

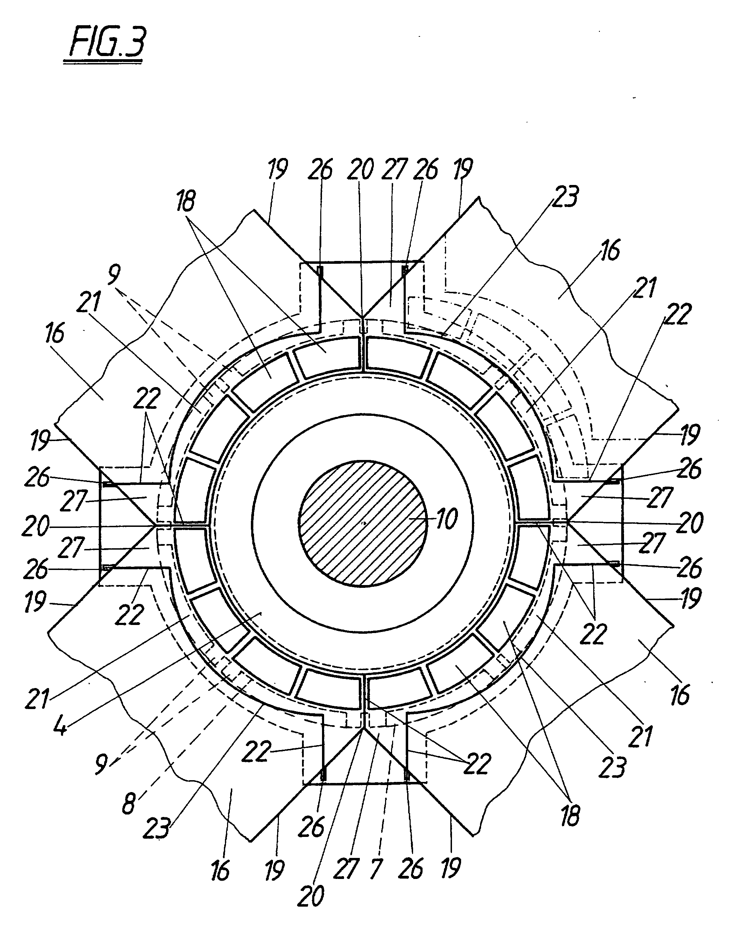

Wie insbesondere der Fig. 3 entnommen werden kann, werden den beiden Stanzpreßwerkzeugen 3 des Ober- und des Unterteils 2, 1 mehrere über den Umfang verteilte Reibbelagbänder 16 zugeführt, wobei die Anordnung so getroffen ist, daß sich im Verlauf der Längsränder 19 ein Schnittpunkt 20 zwischen den Längsrandverläufen außerhalb des durch die einzelnen Reibbelagsegmente 18 bestimmten Ringes ergibt. Durch diese Bedingung ist sichergestellt, daß die Reibbelagbänder 16 mit ihren vorgeschobenen Endstücken 21 den Tragring 8 über seinen Umfang abdecken, so daß in einem Arbeitsgang alle auf den Tragring 8 aufzubringenden Reibbelagsegmente 18 ausgestanzt und an den Trangring 8 angepreßt werden konnen Dementsprechend sind die Stempel 6 und die zugehörigen Durchtrittsöffnungen 5 der Matrizen 4 in einem geschlossenen Ring angeordnet, so daß allen Reibbelagbändern 16 im Bereich des Unter- bzw. Oberteiles 1, 2 jeweils ein gemeinsames Stanzpreßwerkzeug 3 zugeordnet ist.

Damit sich in Vorschubrichtung der Reibbelagbänder 16 im Anschluß an die Schnittpunkte 20 kein Überlappungsbereich ergeben kann, müssen die Endstücke 21 der Reibbelagbänder 16 entsprechend beschnitten werden, und zwar ausgehend von den Schnittpunkten 20 radial zur Achse des Tragringes 8. Die durch eine solche Beschneidung der Endstücke 21 erhaltenen Stoßkanten sind in der Fig. 3 mit 22 bezeichnet. Nach einem Ausstanzen der Reibbelagsegmente 18 sind die Endstücke 21 aus dem Führungsspalt 17 zwischen den Matrizen 4 und den Niederhaltern 11 zu entfernen, damit die einzelnen Reibbelagbänder 16 zum Ausstanzen eines neuen Ringes von Reibbelagsegmenten vorgeschoben werden können. Zu diesem Zweck müssen die Endstücke 21 vom jeweiligen Reibbelagband 16 abgeschnitten werden, wobei die Schnittführung so zu wählen ist, daß das neu beschnittene Bandende wieder Stoßkanten 22 bildet und zwischen diesen Stoßkanten 22 einen Randverlauf 23 aufweist, der an den durch die Reibbelagsegmente 18 gebildeten Ring angepaßt ist. Die erforderliche Beschneidung der Reibbelagbänder 16 erfolgt beim Festklemmen der Reibbelagbänder 16 zwischen den Matrizen 4 und den Niederhaltern 11 der Stanzpreßwerkzeuge 3, weil der Niederhalter 11 oder die Matrize 4 im Bereich jedes Reibbelagbandes 16 außerhalb des Ringes der Durchtrittsöffnungen 5 bzw. der Stempel 6 eine in ihrem Verlauf an die innere Umrißlinie dieses Ringes angepaßte Schneide 24 bildet, die mit einer Gegenschneide oder einer Aussparung 25 im jeweils anderen Teil zusammenwirkt, wie dies den Fig. 1 und 2 entnommen werden kann. An diese den Randverlauf 23 bestimmende Schneide 24 schließt sich ein dazu quer verlaufender Schneidenendabschnitt 26 an, um Stoßkanten 22 auszuschneiden zu können, wie dies der Fig. 3 zu entnehmen ist. Die durch die Stanzpreßwerkzeuge 3 von den Reibbelagbändem 16 abgeschnittenen Endstücke 21 weisen somit übereinstimmende vordere und hintere Begrenzungslinien auf, wodurch sichergestellt ist, daß nach dem Entfernen der abgeschnittenen Endstücke 21 die Reibbelagbänder 16 wieder in die gleiche Bearbeitungslage vorgeschoben werden können. In der Fig. 3 ist im Bereich des oberen rechten Reibbelagbandes 16 strichpunktiert die Lage der Reibbelagsegmente und des Umrisses des neuen Endstückes 21 angedeutet, das nach dem Vorschieben dieses Reibbelagbandes 16 vom Band abgeschnitten wird. Daraus ist ersichtlich, daß das Reibbelagband 16 mit einem nur vergleichsweise geringem Verschnitt zum Ausstanzen der Reibbelagsegmente 18 ausgenützt werden kann.

Zum Entfernen der durch die Endstücke 21 gebildeten Schnittabfälle wird vorzugsweise eine Abführeinrichtung eingesetzt, die ein Greif- oder Stichwerkzeug aufweist, mit dessen Hilfe die Endstücke 21 im Bereich der abstehenden Stege 27 zwischen den vorderen und hinteren Stoßkanten 22 erfaßt und in Richtung dieser Stoßkanten aus dem Führungsspalt 17 zwischen Niederhalter 11 und Matrize 4 entfernt werden können

Da nach jedem Stanzvorgang die Reibbelagbänder 16 um einen der in Förderrichtung gemessenen Länge des Endstückes 21 entsprechenden Betrag gegen das jeweilige Stanzpreßwerkzeug 3 vorgeschoben werden müssen, ist für einen Schrittförderer 28 der Reibbelagbänder 16 zu sorgen, wie er in den Fig. 1 und 2 durch Forderwalzen angedeutet wird.

Die Erfindung ist selbstverständlich nicht auf das dargestellte Ausführungsbeispiel beschränkt, so könnte beispielsweise die Anzahl der Reibbelagbänder geändert werden, wobei zu bedenken ist, daß mit zunehmenden Anzahl von Reibbelagbändern der Schnittabfall verringert werden kann. Die Konstruktionsausführungen lassen sich in sehr unterschiedlicher Weise abwandeln, weil es ja lediglich darum geht, ein gemeinsames Stanzpreßwerkzeug für alle über den Umfang des Tragringes verteilten, die Reibbelagsegmente einer Seite liefernden Reibbelagbänder zur Verfugung zu stellen

## Patentansprüche

1. Verfahren zum Aufkleben von Reibbelagsegmenten (18) auf einen Tragring (8), wobei die Reibbelagsegmente (18) aus einem bandförmigen, dem Tragring (8) auf der zu beklebenden Ringseite zugeführten Reibbelag mit Hilfe von Stempeln (6) eines Stanzpreßwerkzeuges (3) ausgestanzt und an den Tragring (8) angedrückt werden, und wobei dem Tragring (8) über den Umfang verteilt mehrere Reibbelagbänder(16) radial zugeführt werden, aus denen Reibbelagsegmente (18) mit Hilfe der Stempel (6) ausgestanzt und an den Tragring (8) angedrückt werden, **dadurch gekennzeichnet, daß** aus den im Bereich des äußeren Umfanges des Tragringes (8) aneinanderstoßenden Reibbelagbändern (16) ein Ring von Reibbelagsegmenten (18) mit Hilfe der Stempel (6) eines allen Reibbelagbändern (16) gemeinsamen Stanzpreßwerkzeuges (3) zugleich ausgestanzt und an den Tragring (8) angedrückt werden.

2. Verfahren nach Anspruch 1, **dadurch gekennzeichnet, daß** dem Tragring (8) auf beiden Ringseiten über den Umfang verteilt mehrere Reibbelagbänder (16) zum Ausstanzen und Andrücken je eines Ringes von Reibbelagsegmenten (18) zugeführt werden.

3. Vorrichtung zur Durchführung des Verfahrens nach einem der Ansprüche 1 oder 2 mit einer zentrierenden Aufnahme (7) für den Tragring (8) und mit einem der Aufnahme (7) zugeordneten Stanzpreßwerkzeug (3), das einerseits eine Matrize (4) mit mehreren entsprechend der vorgegebenen Verteilung der Reibbelagsegmente (18) auf dem Tragring (8) angeordnete Durchtrittsöffnungen (5) und anderseits durch diese Durchtrittsöffnungen (5) an einen in der Aufnahme (7) gehaltenen Tragring (8) anpreßbare Stempel (6) zum Ausstanzen von Reibbelagsegmenten (18) aus einem bandförmigen Reibbelag aufweist, der auf der der Aufnahme (7) abgekehrten Seite der Matrize (4) dem Stanzpreßwerkzeug (3) über einen radial zur Zentrierungsachse ausgerichteten Schrittförderer zuführbar und mittels eines Niederhalters (11) an die Matrize (4) andrückbar ist, **dadurch gekennzeichnet, daß** mehrere über den Umfang der Aufnahme (7) verteilte Schrittförderer für je ein Reibbelagband (16) vorgesehen sind, daß den Reibbelagbändern (16) ein gemeinsames Stanzpreßwerkzeug (3) zum gleichzeitigen Ausstanzen und Andrücken der Reibbelagsegmente (18) aus den einzelnen Reibbelagbändern (16) zugeordnet ist, daß sich die Längsrandverläufe benachbarter Reibbelagbänder (16) außerhalb des Ringes der Durchtrittsöffnungen (5) bzw. der Stempel (6) des Stanzpreßwerkzeuges (3) schneiden und daß der Niederhalter (11) oder die Matrize (4) im Bereich jedes Reibbelagbandes (16) außerhalb des Ringes der Durchtrittsöffnungen (5) bzw. der Stempel (6) eine in ihrem Verlauf an die innere Umrißlinie dieses Ringes angepaßte Schneide (24) bildet, die mit Abstand vor dem jeweiligen Längsrand (19) der Reibbelagbänder (16) in einen radialen, die Stoßkante (22) zum benachbarten Reibbelagband (16) ausschneidenden Endabschnitt (26) ausläuft.

4. Vorrichtung nach Anspruch 3, **dadurch gekennzeichnet, daß** dem Stanzpreßwerkzeuge (3) auf der einen Seite des Tragringes (8) ein gleichartiges Stanzpreßwerkzeug (3) zum jeweils gemeinsamen Ausstanzen von Reibbelagsegmenten (18) aus mehreren radial zugeführten Reibbelagbändern (16) auf der anderen Tragringseite gegenüberliegt, wobei die Aufnahme (7) für den Tragring (8) die Matrize (4) für eines dieser Stanzpreßwerkzeuge (3) bildet.

5. Vorrichtung nach den Ansprüchen 3 und 4, **dadurch gekennzeichnet, daß** die beiden Stanzpreßwerkzeuge (3) den Ober- und Unterteil (2, 1) eines Presseneinsatzes bilden, wobei jeweils die Matrize (4) im zugehörigen Niederhalter (11) axial verstellbar gelagert ist, während sich der im stempeltragenden Ober- bzw. Unterteil (2, 1) axial verschiebbare Niederhalter (11) gegenüber dem Ober- bzw. Unterteil (2, 1) federnd abstützt.

6. Vorrichtung nach Anspruch 5, **dadurch gekennzeichnet, daß** zumindest zwischen der Matrize (4) und dem Niederhalter (11) des den Unterteil (1) bildenden Stanzpreßwerkzeuges (3) eine Öffnungsfeder (15) vorgesehen ist.

7. Vorrichtung nach einem der Ansprüche 3 bis 6, **dadurch gekennzeichnet, daß** in den Zwickelbereichen zwischen benachbarten Reibbelagbändern (16) Abführeinrichtungen für den Schnittabfall der Reibbelagbänder (16) vorgesehen sind.

8. Vorrichtung nach Anspruch 7, **dadurch gekennzeichnet, daß** die Abführeinrichtungen für den Schnittabfall der Reibbelagbänder (16) in Richtung der Stoßkanten (22) verfahrbare Greif- oder Stichwerkzeuge für den Schnittabfall aufweisen.

9. Vorrichtung nach einem der Ansprüche 3 bis 8, **dadurch gekennzeichnet, daß** die Stempel (6) des Stanzpreßwerkzeuges (3) bzw. der Stanzpreßwerkzeuge (3) elektrisch beheizbar sind.

10. Vorrichtung nach einem der Ansprüche 3 bis 9, **dadurch gekennzeichnet, daß** die Stempel (6) des Stanzpreßwerkzeuges (3) bzw. der Stanzpreßwerkzeuge (3) Prägeleisten zum Einprägen von Ölnuten in die Reibbelagsegmente (18) aufweisen.

## Claims

1. A method of sticking friction lining segments (18) on to a support ring (8), the friction lining segments (18) being punched and pressed against the support ring (8) by means of punches (6) of a punch press tool (3) from a friction lining in strip form fed to the support ring (8) on the side thereof to which the lining is to be stuck, and wherein there are fed radially to the support ring (8) a plurality of friction lining strips (16) which are distributed over the periphery and from which friction lining segments (18) are punched out and pressed against the support ring (8) by means of the punches (6), **characterised in that** from the friction lining strips (16) abutting one another in the region of the outer periphery of the support ring (8) there are simultaneously punched out and pressed against the support ring (8) a ring of friction lining segments (18) by means of the punches (6) of a punch press tool (3) common to all the friction lining strips (16).

2. A method according to claim 1, **characterised in that** there are fed to the support ring (8) on both sides of the ring a plurality of friction lining strips (16) distributed over the periphery for punching out and pressing into contact each ring of friction lining segments (18).

3. Apparatus for performing the method according to claim 1 or 2 with a centring holder (7) for the support ring (8) and with a punch press tool (3) which is associated with the holder (7) and which at one end has a die (4) with a plurality of passage openings (5) arranged to correspond to the predetermined distribution of the friction lining segments (18) on the support ring (8), and at the other end punches (6) adapted to be pressed through said passage openings (5) against a support ring (8) held in the holder (7) for punching friction lining segments (18) out of a friction lining in strip form adapted to be fed, on the side of the die (4) remote from the holder (7), to the punch press tool (3) by means of a stepping conveyor aligned radially to the centring axis, and adapted to be pressed against the die (4) by a work holder (11), **characterised in that** a plurality of stepping conveyors distributed over the periphery of the holder (7) are provided for each friction lining strip (16), **in that** the friction lining strips (16) have an associated common punch press tool (3) for simultaneous punching out and pressing the friction lining segments (18) out of the individual friction lining strips (16) into contact, **in that** the longitudinal edge configurations of adjacent friction lining strips (16) intersect outside the ring of passage openings (5) or the punches (6) of the punch press tool (3) and **in that** the work holder (11) or the die (4) forms, in the region of each friction lining strip (16) outside the ring of passage openings (5) or the punches (6), a cutting edge (24) adapted in its configuration to the inner contour line of said ring, said cutting edge terminating, at a distance in front of the respective longitudinal edge (19) of the friction lining strips (16), in a radial end portion (26) which cuts out the abutting edge (22) to the adjacent friction lining strip (16).

4. Apparatus according to claim 3, **characterised in that** opposite the punch press tool (3) on one side of the support ring (8) there is disposed an identical punch press tool (3) for respective joint punching out of friction lining segments (18) from a plurality of radially supplied friction lining strips (16) on the other side of the support ring, the holder (7) for the support ring (8) forming the die (4) for one of said punch press tools (3).

5. Apparatus according to claims 3 and 4, **characterised in that** the two punch press tools (3) form the top and bottom parts (2, 1) of a press insert, the die (4) being mounted in each case for axial adjustment in the associated work holder (11), while the work holder (11) axially displaceable in the top and bottom part (2, 1) carrying the punches is resiliently supported relatively to the top and bottom parts (2, 1).

6. Apparatus according to claim 5, **characterised in that** an opening spring (15) is provided at least between the die (4) and the work holder (11) of the punch press tool (3) forming the bottom part (1).

7. Apparatus according to any one of claims 3 to 6, **characterised in that** discharge devices for the waste cut off from the friction lining strips (16) are provided in the gusset zones between adjacent friction lining strips (16).

8. Apparatus according to claim 7, **characterised in that** the discharge devices for the waste cut off from the friction lining strips (16) have for the cut waste gripper or piercing tools extending in the direction of the abutting edges (22).

9. Apparatus according to any one of claims 3 to 8, **characterised in that** the punches (6) of the punch press tool (3) or punch press tools (3) are electrically heatable.

10. Apparatus according to any one of claims 3 to 9, **characterised in that** the punches (6) of the punch press tool (3) or punch press tools (3) have embossing elements for embossing oil grooves in the friction lining segments (18).

## Revendications

1. Procédé de collage de segments de garniture de friction (18) sur une bague support (8), les segments de garniture de friction (18) étant obtenus par découpage à partir d'une garniture de friction se présentant sous forme de bande, amenée à la bague support (8) sur la face de bague à coller, le découpage par estampage se faisant à l'aide de poinçons (6), appartenant à un outil d'emboutissage-estampage (3) et étant pressés sur la bague support (8), et où sont amenées, radialement à la bague support (8), une pluralité de bandes de garniture de friction (16) réparties sur la périphérie, d'où des segments de garniture de friction (18) sont découpés par estampage à l'aide des poinçons (6) et pressés sur la bague support (8), **caractérisé en ce que**, à partir des bandes de garniture de friction (16), se jointoyant les unes les autres dans la zone de la périphérie extérieure de la bague support (8), un anneau, formé de segments de garniture de friction (18), est simultanément découpé par estampage, à l'aide des poinçons (6) d'un outil d'emboutissage et d'estampage (3) commun à toutes les bandes de garniture de friction (16), et pressé sur la bague support (8).

2. Procédé selon la revendication 1, **caractérisé en ce que**, à la bague support (8) sont amenées une pluralité de bandes de garniture de friction (16), réparties sur la périphérie, sur les deux faces de bague, pour effectuer le découpage par estampage et le pressage de chaque bague formée de segments de garniture de friction (18).

3. Dispositif de mise en oeuvre du procédé selon l'une des revendications 1 ou 2, avec un logement (7) centreur pour la bague support (8) et avec un outil d'emboutissage et d'estampage (3), associé au logement (7), qui, d'une part, présente une matrice (4), ayant plusieurs ouvertures de passage (5), disposées sur la bague support (8) de manière correspondant à la répartition prédéterminée des segments de garniture de friction (18) et, d'autre part, présente des poinçons (6) pouvant être pressés à travers ces ouvertures de passage (5) sur une bague support (8) maintenue dans le logement (7), afin de produire le découpage par estampage de segments de garniture de friction (18) à partir d'une garniture de friction se présentant sous forme de bande, la garniture de friction étant susceptible d'être amenée à l'outil de découpage par estampage (3), sur la face, opposée au logement (7), de la matrice (4), par l'intermédiaire d'un transporteur pas à pas, orienté radialement par rapport à l'axe de centrage, et la garniture de friction étant susceptible d'être pressée sur la matrice (4) à l'aide d'un dévêtisseur (11), **caractérisé en ce qu'**une pluralité de transporteurs pas à pas, répartis sur la périphérie du logement (7), sont prévus pour chaque bande de garniture de friction (16), **en ce qu'**aux bandes de garniture de friction (16) est associé un outil d'emboutissage et d'estampage (3) commun, pour produire le découpage par estampage et le pressage simultanés des segments de garniture de friction (18) à partir des différentes bandes de garniture de friction (16), **en ce que** les allures des bords longitudinaux de bandes des garnitures de friction (16) voisines se coupent à l'extérieur de l'anneau des ouvertures de passage (5), respectivement des poinçons (6) de l'outil d'emboutissage et d'estampage (3), et **en ce que** le dévêtisseur (11) ou la matrice (4), dans la zone de chaque bande de garniture de friction (16), forme, à l'extérieur de l'anneau des ouvertures de passage (5) respectivement des poinçons (6), un tranchant (24) adapté, par son allure, à la ligne de profil intérieure de cet anneau, tranchant évoluant à distance à l'avant du bord longitudinal (19) respectif des bandes de garniture de friction (16) en formant un tronçon d'extrémité radial (26), découpant l'arête de joint (22) par rapport à la bande de garniture de friction (16) voisine.

4. Dispositif selon la revendication 3, **caractérisé en ce qu'**un outil d'emboutissage et d'estampage (3) de même type, devant chaque fois découper par estampage conjointement des segments de garniture de friction (18) à partir d'une pluralité de bandes de garniture de friction (16) amenées radialement, est respectivement prévu sur une première face de la bague support (8), à l'opposé de l'outil d'emboutissage et d'estampage (3) situé sur l'autre face de bague support, sachant que le logement (7) prévu pour la bague support (8) forme la matrice (4) pour l'un de ces outils d'emboutissage et d'estampage (3).

5. Dispositif selon les revendications 3 et 4, **caractérisé en ce que** les deux outils d'emboutissage et d'estampage (3) forment la partie supérieure et la partie inférieure (2, 1) d'un insert d'emboutissage, sachant que, chaque fois, la matrice (4) est montée de façon réglable axialement dans le dévêtisseur (11) afférent, tandis que le dévêtisseur (11), déplaçable axialement dans la partie supérieure ou partie inférieure (2, 1) portant le poinçon, prend appui élastiquement par rapport à la partie supérieure ou partie inférieure (2, 1).

6. Dispositif selon la revendication 5, **caractérisé en ce que**, au moins entre la matrice (4) et le dévêtisseur (11) de l'outil d'emboutissage et estampage (3) formant la partie inférieure (1), est prévu un ressort d'ouverture (15).

7. Dispositif selon l'une des revendications 3 à 6, **caractérisé en ce que**, dans les zones en gousset, se trouvant entre des bandes de garniture de friction (16) voisines, sont prévus des dispositifs d'évacuation pour les chutes de découpage des bandes de garniture de friction (16).

8. Dispositif selon la revendication 7, **caractérisé en ce que** les dispositifs d'évacuation pour la chute de découpage des bandes de garniture de friction (16) présentent des outils de saisie ou de piquage de la chute de découpage, déplaçables dans la direction des arêtes de jointoiement (22).

9. Dispositif selon l'une des revendications 3 à 8, **caractérisé en ce que** les poinçons (6) de l'outil d'emboutissage et estampage (3), respectivement des outils d'emboutissage et estampage (3), peuvent être chauffés électriquement.

10. Dispositif selon l'une des revendications 3 à 9, **caractérisé en ce que** les poinçons (6) de l'outil d'emboutissage et d'estampage (3), respectivement des outils d'emboutissage et estampage (3), présentent des bandes d'embossage, pour le formage tridimensionnel de rainures à huile dans les segments de garniture de friction (18).
